(19) Europäisches Patentamt
European Patent Office
Office européen des brevets

(11) **EP 1 268 201 B1**

(12) **EUROPÄISCHE PATENTSCHRIFT**

(45) Veröffentlichungstag und Bekanntmachung des Hinweises auf die Patenterteilung:
**07.01.2004 Patentblatt 2004/02**

(21) Anmeldenummer: **01957596.8**

(22) Anmeldetag: **09.03.2001**

(51) Int Cl.$^7$: **B32B 27/08**, C09J 7/02

(86) Internationale Anmeldenummer:
**PCT/EP2001/002680**

(87) Internationale Veröffentlichungsnummer:
**WO 2001/068364 (20.09.2001 Gazette 2001/38)**

(54) **ADHÄSIONSFOLIE**

ADHESIVE FILM

PELLICULE D'ADHESION

(84) Benannte Vertragsstaaten:
**AT BE CH CY DE DK ES FI FR GB GR IE IT LI LU MC NL PT SE TR**

(30) Priorität: **14.03.2000 DE 10012261**

(43) Veröffentlichungstag der Anmeldung:
**02.01.2003 Patentblatt 2003/01**

(73) Patentinhaber:
• **Hoefer, Holger**
**58239 Schwerte (DE)**
• **Hoefer, Joerg**
**1640 Rhode-St.-Genèse (BE)**

(72) Erfinder:
• **Hoefer, Holger**
**58239 Schwerte (DE)**
• **Hoefer, Joerg**
**1640 Rhode-St.-Genèse (BE)**

(74) Vertreter: **Weber, Thomas, Dr.Dipl.-Chem. et al Patentanwälte
von Kreisler-Selting-Werner,
Postfach 10 22 41
50462 Köln (DE)**

(56) Entgegenhaltungen:
WO-A-97/00772    GB-A- 2 217 256
US-A- 3 812 005

**Beschreibung**

Technisches Gebiet der Erfindung

Die Erfindung betrifft eine Adhäsionsfolie aus einer Trägerschicht und einer darauf klebstofffrei angeordneten Adhäsionsbeschichtung, die auf glatten Oberflächen, wie beispielsweise Glas, poliertem Metall und Lackschichten ohne Anwendung eines zusätzlichen Klebstoffes alleine durch Molekularkräfte haftet. Die Erfindung betrifft ferner ein Verfahren zur Herstellung dieser Adhäsionsfolie sowie deren Verwendung.

Hintergrund der Erfindung

Bereits seit vielen Jahren sind Folien aus weichem Polyvinylchlorid (PVC) bekannt, welche durch Adhäsion auf glatten Oberflächen haften. Zum Ausgleich der fehlenden Dimensionsstabilität werden diese Folien mit stabilen Trägerfolien zu einem steifen Schichtverbund verklebt. Da hochelastische Weich-PVC-Folien aber die Neigung haben zu schrumpfen, müssen für ein planliegendes Laminat zwangsläufig dicke/steife Trägerfolien eingesetzt werden. Nur so lässt sich vermeiden, dass sich der Verbund unter den Zugspannungen der Weich-PVC-Folie krumm zieht ("Bimetall-Effekt"). Dieses Problem konnte auch nicht bei den seit den 80er Jahren hergestellten verklebten Verbunden aus Weich-PVC und Polyester gelöst werden.

Darüber hinaus kommt es bei den verklebten Laminaten nach längerer Lagerung durch Schrumpfung der Weich-PVC-Folie gegenüber der Trägerfolie zum Freilegen von Klebstoffrändern. Ferner ist das Verfahren zur Herstellung von Adhäsionsfolien aus dimensionsstabilen Trägerfolien und hochelastischen Weich-PVC-Folien durch Verkleben der beiden Folien technisch sehr aufwendig und erfordert außerdem teure und insbesondere mit Weichmacher verträgliche Klebstoffe.

Die WO-A-97/00772 beschreibt eine wenigstens 350 μm starke Folie bestehend aus einer aus Polyester bestehenden flexiblen Trägerschicht und einer einen Weichmacher enthaltenden Polyvinylchlorid-Folie als Adhäsionsschicht, die auf der Trägerschicht durch Verwendung eines Klebers angebracht ist. Die Trägerschicht als auch die Kleberschicht sind dabei weichmacherhemmend ausgebildet, wodurch verhindert wird, dass der Weichmacher aus der Adhäsionsschicht in die Trägerschicht übertritt. Auf der Adhäsionsschicht kann eine Abdeckschicht und auf der Trägerschicht eine mit Kleber verbundene Deckschicht angebracht sein. Um ein flaches Aufliegen der Folie auf einer planen Unterlage zu gewährleisten, ist die Trägerschicht zwischen 100 und 200 μm, die Adhäsionsschicht 250 μm, stark. Die Trägerschicht kann nur dann eine Dicke von unter 100 μm, beispielsweise 50 μm, aufweisen, wenn zusätzlich noch eine Deckschicht von 100 bis 200 μm auf der Trägerschicht angeordnet ist. Die Selbstrückstellkräfte der Adhäsionsfolie werden dann von einer Doppelschicht von wenigstens 150 μm fixiert.

Obwohl diese bekannten dicken Verbundfolien in etwa dimensionsstabil sind, sind sie jedoch für viele Anwendungen, insbesondere jedoch in Bezug auf das Verfahren zu ihrer Herstellung und die technisch bedingte starke Folienstärke unbefriedigend.

Ausgehend vom Stand der Technik war es somit eine Aufgabe der Erfindung, eine dimensionsstabile und dennoch dünne Adhäsionsfolie zur Verfügung zu stellen, bei welcher die Trägerfolie und die Adhäsionsschicht ohne zusätzliche dazwischen befindliche Klebstoffschicht dauerhaft miteinander verbunden sind, was nicht nur das Auftreten von Klebstoffrändern bei längerem Lagern verhindert, sondern auch das Herstellungsverfahren wesentlich vereinfacht. Die Adhäsionsfolie soll besonders dünn ausgestaltet werden können, ohne dass Kompromisse hinsichtlich der Planlage eingegangen werden müssen, wie beispielsweise durch Verwendung einer starken Folienstärke, insbesondere der Trägerschicht. Die Adhäsionsfolie soll ferner derartig gegen eine Migration von Weichmachern stabilisiert sein, dass Träger- und Abdeckschicht nicht weichmacherhemmend ausgebildet werden müssen.

Kurzbeschreibung der Erfindung

Die Erfindung betrifft eine Folie umfassend eine Trägerschicht (1) und eine Adhäsionsbeschichtung (2) aus Weich-PVC, dadurch gekennzeichnet, dass die Adhäsionsbeschichtung (2) klebstofffrei auf der Trägerschicht (1) angeordnet ist, die Trägerschicht eine Schichtdicke von 10 bis 45 μm und der Kunststoff der Trägerschicht (1) einen Schmelzpunkt von wenigstens 100°C aufweist und dieser wenigstens 20 °C über dem Erweichungspunkt des Weich-PVCs liegt und die Schichtdicke des Folienverbunds bestehend aus der Trägerschicht (1) und der Adhäsionsbeschichtung (2) höchstens 280 μm ist, wobei das Weich-PVC der Adhäsionsbeschichtung (2), einen Stabilisator, der ausgewählt ist aus der Gruppe bestehend aus metallorganischen Verbindungen des Cadmiums, Bariums, Zinks, Calciums und Antimons sowie Barium/Calcium, Barium/Cadmium, Barium/Cadmium/Zink, Calcium/Zink und Barium/Zink und wenigstens 28 Gew.-% eines monomeren, semipolymeren oder polymeren Weichmachers enthält.

Die Erfindung betrifft ferner ein Verfahren zur Herstellung der oben beschriebenen Folie durch einseitiges Auftragen des Weich-PVC der Adhäsionsbeschichtung auf die Trägerschicht, wobei die Verfahrenstemperatur oberhalb des Erweichungspunktes des Weich-PVC und unterhalb des Schmelzpunktes des Kunststoffes der Trägerschicht liegt.

Die erfindungsgemäße dünne Adhäsionsfolie weist die obengenannten Nachteile nicht auf, insbesondere ist sie dimensionsstabil und liegt plan. Ferner benötigt man bei der Herstellung auch keine Klebstoffe mehr, welche bei der Folienlagerung zu Problemen führen. Darüber hinaus findet eine Migration von Weichmachern nicht statt.

Unter einer "dünnen" Adhäsionsfolie versteht man gemäß der Erfindung einen Folienverbund bestehend aus der Trägerfolie und einer Adhäsionsbeschichtung, wobei dieser Folienverbund eine Stärke von wenigstens 100 µm, vorzugsweise wenigstens 80 µm, besonders bevorzugt wenigstens 70 µm bis höchstens 280 µm, vorzugsweise höchstens 210 µm und besonders bevorzugt bis höchstens 150 µm aufweist. Eine derartige dünne Adhäsionsfolie kann auf der Trägerfolie und/oder der Adhäsionsbeschichtung wie unten beschrieben weitere Schichten aufweisen.

Die erfindungsgemäße Adhäsionsfolie haftet klebstofffrei mit ihrer glänzenden, für die Adhäsion bestimmten Seite (Adhäsionsseite) auf glänzenden Oberflächen.

Beschreibung der Figuren

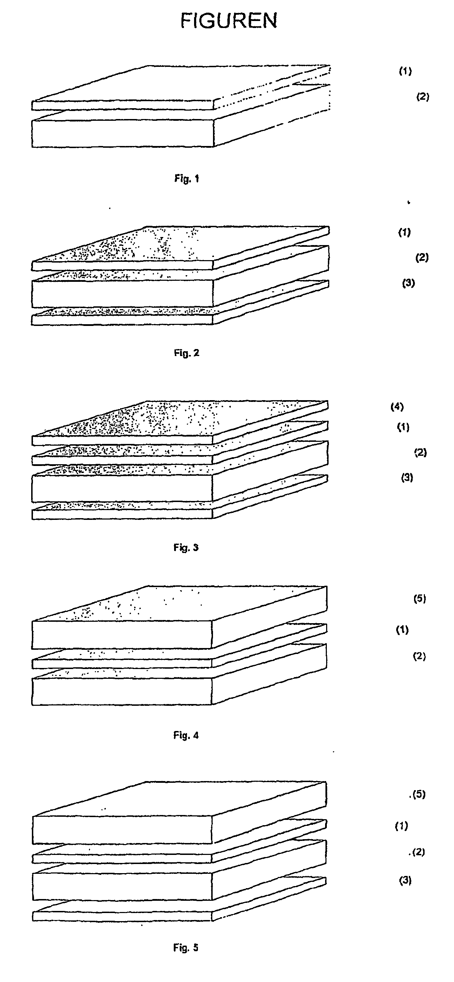

Figur 1 zeigt die erfindungsgemäße Adhäsionsfolie bestehend aus einer dimensionsstabilen Trägerschicht (1) und einer spannungsfrei darauf aufgebrachten Adhäsionsbeschichtung (2). Für eine eventuell auf der Trägerschicht angeordnete zusätzliche Deckschicht siehe auch Figur 3.

Figur 2 zeigt die in Figur 1 abgebildete Adhäsionsfolie mit einer zusätzlich angebrachten Abdeckschicht (3) für die Adhäsionsbeschichtung (2).

Figur 3 zeigt die in Figur 2 abgebildete Adhäsionsfolie mit Abdeckschicht (3), wobei auf die Trägerschicht (1) zusätzlich noch eine Deckschicht (4) angeordnet ist. Sie dient als Schutzschicht für die eventuelle Bedruckung der Trägerschicht (1) oder auch um der Außenoberfläche der Trägerschicht (1) besondere Eigenschaften zu geben.

Figur 4 zeigt die dimensionsstabile Trägerschicht (1) mit einer beidseitig darauf angeordneten Adhäsionsbeschichtung (2) und (5).

Figur 5 zeigt die dimensionsstabile Trägerschicht (1) mit der beidseitig darauf angeordneten Adhäsionsbeschichtung (2) und (5), wobei eine der Adhäsionsbeschichtungen nochmals mit einer Abdeckschicht (3) abgedeckt wurden, um die Weiterverarbeitung zu erleichtern.

Beschreibung der Erfindung

Der Kunststoff, der für die Trägerschicht (1) zur Anwendung kommt, besitzt einen Schmelzpunkt von wenigstens 100°C, vorzugsweise wenigstens 160°C, besonders bevorzugt von wenigstens 200°C. Der Kunststoff ist insbesondere ausgewählt aus der Gruppe bestehend aus Polyestern, PVC, Polyethylen, Polypropylen und Polyacrylat. So kann auch ein extrudierter Polyester mit einem Schmelzpunkt von 255 - 260°C (ASTM E 294-85) mit thermosensitiven Eigenschaften bei Verfahrenstemperaturen von 140 - 200°C eingesetzt werden. Unter Kunststoff sind im Sinne der Erfindung auch Kunstoffblends der genannten Kunststoffe zu verstehen, wobei der Schmelzpunkt wie angegeben eingestellt ist. Sollte der eingesetzte Kunststoff keinen Schmelzpunkt besitzen, so tritt an die Stelle des Schmelzpunkts der Erweichungspunkt des jeweiligen Kunststoffs.

Der Schmelz- oder Erweichungspunkt des Materials der Trägerfolie liegt wenigstens 20°C, vorzugsweise wenigstens 30°C, besonders bevorzugt wenigstens 40°C über dem Erweichungspunkt des Weich-PVCs der Adhäsionsbeschichtung.

Die Trägerschicht (1) weist eine Schichtdicke von wenigstens 10 µm bis 45 µm, vorzugsweise von wenigstens 20 µm und bis 45 µm auf, ist also sehr dünn. Die Trägerfolie kann je nach beabsichtigter Endanwendung transparent, opak oder farbig sein. Auf eine besonders weichmacherhemmende Ausbildung der Trägerschicht, wie sie beispielsweise in der WO-A-97/00772 beschrieben ist, kann bei der Trägerschicht gemäss der Erfindung verzichtet werden. Die Trägerschicht kann so modifiziert sein, dass sie durch übliche Methoden bedruckt werden kann, beispielsweise Offset-Druck, Laser-Druck, Ink-Jet-Druck, Digitaldruckverfahren oder wieder abwischbar beschriftet werden kann.

Die Trägerfolie (1) kann ferner aus einem Folienverbund (Laminat) der oben angegebenen Schichtstärke bestehen. So kann die Trägerfolie beispielsweise aus einem Folienverbund zweier miteinander verbundenen Polyesterfolien, Polyester/Polypropylen, Polyester/Polyethylen, Polyethylen/Polyethylen, Polypropylen/Polypropylen, Polyethylen/Polypropylen, bestehen, die jeweils einen Schmelzpunkt (oder Erweichungspunkt) innerhalb des oben beschriebenen Bereichs, also oberhalb desjenigen des Materials der Adhäsionsschicht aufweisen.

Auf der Trägerschicht (1) kann ferner noch eine Deckschicht (4) angebracht sein. Die Deckschicht (4), welche eine Schichtdicke von 2 bis 250 µm, vorzugsweise von 15 bis 100 µm und besonders bevorzugt von 30 bis 75 µm aufweist, kann aus einem Kunststoff bestehen. Dieser ist vorzugsweise ausgewählt aus der Gruppe bestehend aus Polyester, Polyethylen, Polypropylen, PVC (mit einem Weichmacheranteil von 0 bis 7 Gew.-%), Papier, einer Lack- oder Farbbeschichtung oder einer Metallfolie bestehen und ist mit der Trägerschicht (1) verklebt oder heißversiegelt. Kleber und Verfahren, die für die jeweils verwendeten Materialien geeignet sind, wie Dispersionskleber, Acrylatkleber auf wässriger oder lösungsmittelhaltiger Basis, Polyurethankleber und Heißsiegelverfahren sind dem Fachmann bekannt. Die Deckschicht (4) kann aber auch aus einer gedruckten, gestrichenen oder flüssig aufgetragenen Beschichtung von 2 - 50 g/m$^2$ oder einer noch leichteren, mittels Bedampfung aufgebrachten Schicht bestehen.

Bei der Auswahl des Materials für die Deckschicht (4) kommt es im wesentlichen auf die beabsichtigte Endanwendung der erfindungsgemässen Adhäsionsfolie an. So kann die Deckschicht (4) als reine Schutzschicht für die Trägerschicht (1) oder deren Bedruckung/Beschichtung dienen, aber auch selbst zur Aufnahme einer Bedruckung oder zur Farbgebung der Adhäsionsfolie. Ferner kann die Deckschicht (4) als Sperrschicht und/oder lebensmittelverträglich ausgebildet sein. Durch entsprechende Zusätze können der Deckschicht aber auch antistatische Eigenschaften verliehen werden. Auf der Deckschicht können jederzeit weitere Beschichtungen angebracht werden, die der beabsichtigten Endanwendung der Adhäsionsfolie gerecht werden, wie beispielsweise eine zusätzliche Schutzschicht oder eine Beschichtung, welche die Bedruckung der Deckschicht ermöglicht.

Die Deckschicht (4), die auf der erfindungsgemässen Adhäsionsschicht angebracht werden kann, kann dementsprechend so modifiziert sein, dass sie durch übliche Methoden bedruckt werden kann, beispielsweise Offset-Druck, Laser-Druck, Ink-Jet-Druck, Digitaldruckverfahren oder wieder abwischbar beschriftet werden kann.

Alternativ zur Deckschicht (4) kann die Trägerschicht (1) auf der der Adhäsionsschicht (1) gegenüberliegenden Seite wie nachfolgend beschrieben eine weitere Adhäsionsschicht (5) aus Weich-PVC aufweisen. Diese ist wie die Adäsionsschicht (2) klebstofffrei auf der Trägerfolie (1) angeordnet.

Die Adhäsionsschicht (2) ist auf der Trägerschicht (1) ohne Verwendung eines zusätzlichen Klebstoffes, also klebstoffrei, angebracht. Eine zweite Adhäsionsschicht (5) kann, wie erwähnt, auf der der ersten Adhäsionsschicht (2) gegenüberliegenden Seite der Trägerschicht (1) angeordnet sein. Die nachfolgend im Zusammenhang mit der Adhäsionsschicht (2) gemachten Ausführungen gelten sinngemäß auch für die gegebenenfalls vorhandene zweite Adhäsionsschicht (5). Die Adhäsionsschicht (2) besteht aus einem Weich-PVC mit einer Schichtdicke von 60 bis 200 µm, vorzugsweise von 70 bis 180 µm, besonders bevorzugt von 80 bis 150 µm. Der Erweichungspunkt des Weich-PVC beträgt 60 bis 80°C, vorzugsweise 65 bis 75°C. Erfindungsgemäss enthält das als Adhäsionsbeschichtung (2) bzw. (5) verwendete Weich-PVC wenigstens 28 Gew.-%, vorzugsweise wenigstens 30 Gew.-%, besonders bevorzugt wenigstens 32 Gew-.% eines monomeren, semipolymeren oder polymeren Weichmachers. Der Anteil des Weichmachers in der Weich-PVC-Zusammensetzung beträgt bis zu 45 Gew.-%, vorzugsweise bis zu 40 Gew.-%, besonders bevorzugt bis zu 38 Gew.-%.

Die erfindungsgemäß in der Weich-PVC-Schicht zur Anwendung kommenden Weichmacher sind vorzugsweise monomer oder semipolymer. Besonders bevorzugte monomere Weichmacher sind insbesondere ausgewählt aus der Gruppe bestehend aus $C_4$-$C_{12}$ Estern der Phthalsäure (Phthalate), der Adipinsäure (Adipate), der Azealinsäure (Azetate), Sebacinsäure (Sebacate) und Trimellitsäure (Trimellitate) und Phosphorsäure (Phosphate). Beispielhaft seien genannt Diethylhexylphthalat (DOP/DEHP), Diisononylphthalat (DINP), Diisodecylphthalat (DIDP), Heptylundecyiphthalat (HUP), Di-n-octylphthalate (DnOP), Nonylundecylphthalat (NUP), Diundecylphthalat (DUP), Dibutylphthalat (DBP), Diisobutylphthalat (DIBP), Diisopentylphthalat (DIPP), Diisoheptylphthalat (DIHP), Dimethylphthalat (DMP), Diethylphthalat (DEP), Butylbenzylphthalat (BBP), Dibutylglycolphthalat, Diethylhexyladipat (DOA/DEHA), Dioctyladipat (DDA), Diisononyladipat (DINA), Dihexyladipat (DHA), Diisodecyladipat (DIDA), synthetische organische Phosphate [z. B. Reofos 95 (Triarylphosphat)], Dioctylsebacat (DOS), Dioctylazealat (DOZ), Tricresylphthalat (TCP) und Ditridecylphthalat (DTDP), und RDP.

Zusätzlich zu dem Weichmacher enthält das Weich-PVC der Adhäsionsschicht noch einen Stabilisator, welcher verhindert, dass der Weichmacher durch das Schichtsystem der Adhäsionsfolie wandert oder an die Oberfläche abgegeben wird, die mit der Adhäsionsfolie in Kontakt kommt. Geeignete Stabilisatoren für PVC sind im Stand der Technik bekannt. Die Stabilisatoren sind ausgewählt aus der Gruppe bestehend aus metallorganischen Verbindungen des Cadmiums, Bariums, Zinks, Calciums und Antimons. Bevorzugte Antimon-Verbindungen sind Antimonmercaptide, die im Handel als Irgastab® S 110 (Ciba Geigy), Synpron® 1027 (Synthetic Products Co.), Mark 2115 (Argus Chemical) und Therm Check 1514 (Ferro Chemical) erhältlich sind. Calcium, Barium, Zink und Cadmium werden vorzugsweise in Form ihrer Carboxylate eingesetzt. Die den Carboxylaten zugrundliegenden Carbonsäuren sind aliphatisch und enthalten zwischen 6 und 22, vorzugsweise 6 bis 18 Kohlenstoffatome. Bevorzugt sind die Hexoate, Heptoate, Octoate, Laurate und Stearate, wie beispielsweise Calciumstearat. Die genannten Metalle können ebenfalls in Form von Komplexen, beispielsweise Komplexen mit Benzoesäure, substituierten Phenolen und Petroleum-Säuren vorliegen.

Die Gemischtmetall-Stabilisatoren sind insbesondere ausgewählt aus der Gruppe bestehend aus metallorganischen Verbindungen enthaltend Barium/Calcium, Barium/Cadmium, Barium/Cadmium/Zink, Calcium/Zink, Barium/Zink-Gemischen, die alle im Handel, oft als Gemisch mit organischen Zusatzstoffen wie Epoxiden, erhältlich sind. Für weitere Einzelheiten wird auf "PVC Plastics-Properties, Processing and Applications" von W. V. Titow, Elsevier Applied Science Publishers, 1990, verwiesen.

Der Anteil dieser metallorganischen Stabilisatoren im Weich-PVC beträgt 0,1 bis 8,0 Gew-.%, vorzugsweise 0,3 bis 5,0 Gew-.% und besonders bevorzugt 0,4 bis 1,0 Gewichtsprozent, bezogen auf die Weich-PVC-Schicht. Typische Beispiele für Barium/Zink-Stabilisatoren sind Synpron® 1513 (Synthetic Products Co., USA), Mark 2181 und 4004 (Argus Chemical), Naftovin® BZ (Chemetall, Deutschland), Stanivor® BZ 329 (Ceca SA, Frankreich), Irgastab® BZ 590 Serie (Ciba-Geigy) und Lastab DC 45, 48 und 49 (Lagor SpA, Italien).

Die Adhäsionsbeschichtung (2) kann transparent, opak oder eingefärbt sein. Die Adhäsionsbeschichtung (5) kann unabhängig von der Adhäsionsbeschichtung (2) ebenfalls transparent, opak oder farbig sein.

Die Adhäsionsschicht (2) ist von der Trägerfolie (1) mechanisch nicht ohne Zerstörung trennbar. Beim Versuch die beiden Schichten zu trennen, wird eher die Trägerfolie oder die Adhäsionsbeschichtung einreißen oder sich dehnen.

Auf der der Trägerschicht (1) gegenüberliegenden Seite der Adhäsionsschicht (2) kann ferner eine Abdeckschicht (3) angebracht werden, welche die Adhäsionsschicht (2) schützt und das unerwünschte Haften der Adhäsionsfolie auf glatten Unterlagen, insbesondere während des Herstellungsprozesses oder während der Weiterverarbeitung verhindert. Bei der Abdeckschicht (3) handelt es sich um eine gussgestrichene oder kunststoffbeschichtete Papierschicht oder eine Kunststofffolie, die ausgewählt ist insbesondere aus der Gruppe bestehend aus Polyester-, Polyethylen-, oder Polypropylenfolie. Auch eine Abdeckschicht aus einer Kombination aus einer Papier- und Kunststofffolie kann verwendet werden. Ist auf der Trägerfolie (1) eine weitere Adhäsionsschicht (5) wie oben beschrieben angeordnet, so kann auf dieser vorzugsweise ebenfalls eine Abdeckschicht angeordnet sein. Die Abdeckschicht (3) weist eine Schichtdicke von 10 bis 400 µm, vorzugsweise von 12 bis 320 µm, besonders bevorzugt von 15 bis 200 µm auf.

Die erfindungsgemässen Adhäsionsfolien kommen bedingt durch den nachfolgend beschriebenen Herstellungsprozess wie oben beschrieben mit sehr dünnen Trägerfolien mit einer Schichtstärke von vorzugsweise nur bis zu 50 µm aus und können dennoch mit den speziellen Oberflächeneigenschaften von hochelastischem PVC ausgerüstet werden. Obwohl nur sehr dünne Trägerfolien verwendet werden, sind die erfindungsgemässen Adhäsionsfolien dimensionsstabil und liegen flach auf planen Oberflächen auf, was insbesondere bei der Herstellung und Weiterverarbeitung (Bedrucken, Stanzen) unbedingt notwendig ist. Wenn für die Herstellung von gestanzten Etiketten die Adhäsionsbeschichtung (2) mit einer dimensionsstabilen Abdeckungsschicht (3) versehen werden muss, bleibt der Gesamtverbund weiterhin ausreichend flexibel. Daher können auch leichter zu verarbeitende Abdeckpapiere und Abdeckfolien (3) verwendet werden. Die erfindungsgemässe Folie hat ferner eine höhere Steifigkeit als handelsübliche einschichtige Adhäsionsfolien und kann daher auch in automatischen Etikettiergeräten eingesetzt werden. Die Verarbeitung ist dabei auch dadurch erleichtert, dass die Folie bei einseitiger Beschichtung nur einseitig haftet. Auch wenn die Haftseite der Folie mit einem Abdeckpapier versehen wird, ist sie unempfindlich gegen Druck. Somit können nun auch Rollen mit sehr großen Rollendurchmessern für schnelllaufende Etikettendruckmaschinen hergestellt werden. Bei den Laminaten des Standes der Technik wird nach einigen Monaten durch Schrumpfen der Weich-PVC-Folie an den Rändern die Klebstoffbeschichtung freigelegt. Dieses Problem tritt bei den erfindungsgemässen Adhäsionsfolien nicht auf. Die bei den Adhäsionsfolien des Standes der Technik benötigten weichmacherhemmenden Sperrschichten und/oder Klebstoffe sind bei den erfindungsgemässen Adhäsionsfolien nicht erforderlich, da die Weich-PVC-Adhäsionsbeschichtung (2), wie oben erwähnt, durch geeignete Stabilisatoren ausreichend gegen ein Wandern/Ausbluten des Weichmachers geschützt ist.

Die erfindungsgemässen Adhäsionsfolien haften einwandfrei mit der Seite der Adhäsionsbeschichtung klebstoffrei allein durch Molekularkräfte auf glatten Oberflächen. Die Adhäsionsfolien können beispielsweise verwendet werden als

- Etikett, beispielsweise als passgenaues Werbeetikett, welches sich rückstandsfrei entfernen und wiederverwenden lässt;
- dimensionsstabiler Oberflächenschutz;
- Befestigungshilfe mit ein- oder beidseitiger Haftung;
- beliebig oft haftendes Symbol im Organisationsmittelbereich oder in der Spielzeugindustrie;
- Fenstermagnetfolie als Untergrund für abnehmbare Beschriftungen;
- Fensterdekoration wie beispielsweise Imitation von Bleiverglasung,
- Haftvermittler in industriellen Produktionsabläufen.

Eine erfindungsgemäße Folie, die auf beiden Seiten der Trägerfolie eine Adhäsionsschicht aufweist, kann als Befestigungsmittel verwendet werden. So kann die Folie zwischen zwei Glasscheiben als rutschfester Abstandshalter verwendet werden. Zwei hochglänzende Flächen (z. B. Glas auf Metall- oder Lackoberflächen) lassen sich mit einer derartigen Folie dauerhaft und rutschfest verbinden, können aber doch, wenn gewünscht, jederzeit wieder getrennt und neu zusammengesetzt werden.

Mit der erfindungsgemäßen Folie kann beispielsweise das Problem gelöst werden, mit einem automatischen Etikettenspendeautomat Glasgefäße mit einem bedruckten, leicht abnehmbaren Werbeetikett passgenau zu versehen.

- Selbstklebende . Folien scheiden für diesen Zweck aus, da sichergestellt werden muss, dass keinerlei Klebstoffreste hinterlassen werden.
- Einschichtige klebstofffreie Adhäsionsfolien scheiden ebenfalls aus, da diese extrem weichen Folien nicht steif genug sind, um sich mit hohen Geschwindigkeiten spenden zu lassen und darüber hinaus wegen ihrer beidseitig haftenden Oberfläche in einigen Spendeautomaten nicht laufen und zudem keine Dimensionsstabilität bieten.
- Ferner scheidet die Folie gemäß WO-A-97/00772 aus, da sich der dicke Verbund nicht auf einer Etikettenmaschine zu vorgestanzten und entgitterten Etiketten verarbeiten lässt. Dieser starke Verbund würde brettartig steif, wenn er mit einem noch zum Stanzen geeigneten Abdeckpapier/Abdeckfolie ausgerüstet würde. Darüberhinaus lässt sich dieses Produkt nicht automatisch spenden und ist zudem viel zu teuer.

Gemäß dieser Erfindung besteht eine beispielhafte Etikettenfolie aus einer 30 µm starken Trägerschicht mit einer 150 µm starken Adhäsionsbeschichtung. Als Abdeckpapier könnte in diesem Fall ein dünnes PE-beschichtetes Glassinepapier eingesetzt werden. Aus einem solchen Verbund lassen sich vorgestanzte/bedruckte Etiketten herstellen, welche sich problemlos mit einem Etikettenspendeautomaten auf den Glasgefäßen anbringen lassen.

Im Herstellungsverfahren gemäss dem erfindungsgemässen Verfahren wird die Weich-PVC-Adhäsionsbeschichtung (2) auf die Trägerschicht (1) so aufgetragen, dass das Weich-PVC auf eine Temperatur oberhalb dessen Erweichungspunktes, jedoch unterhalb des Schmelzpunktes des Kunststoffes der Trägerschicht erwärmt wird.

Erfindungsgemäß beträgt die Verfahrenstemperatur, d.h. die Temperatur, bei weicher das Weich-PVC auf die Trägerfolie aufgetragen wird, 80 bis 250°C, vorzugsweise 110 bis 200°C, besonders bevorzugt 130 bis 170°C, in Abhängigkeit des Schmelz-/Erweichungspunktes des als Trägerfolie eingesetzten Materials und unter Berücksichtigung, dass der Schmelz/Erweichungspunkt des Materials der Trägerfolie wenigstens 20°C, vorzugsweise wenigstens 30°C und besonders bevorzugt wenigstens 40°C über den Erweichungspunkt des Weich-PVC liegt. Die Verfahrenstemperatur ($T_v$) liegt somit zwischen dem Erweichungspunkt ($mp_{PVC}$) des Weich-PVC (oder ist mit ihr identisch) und dem Schmelz-/Erweichungspunkt ($mp_T$) des Materials der Trägerfolie, so dass gilt:

$$mp_{PVC} = T_V < mp_T, \text{ bei gleichzeitig: } mp_T = mp_{PVC} + 20°C.$$

In einem Beispiel wird die Folie der Trägerschicht, beispielsweise Polyester, mit einem Schmelzpunkt von etwa 255°C, mit der hochelastischen Weich-PVC-Beschichtungsmasse belegt, welche einen deutlich niedrigeren Erweichungspunkt von beispielsweise 70°C hat. Für das Beschichtungsverfahren wird eine Temperatur von 140 bis 160°C gewählt. Dabei verbindet sich die weiche PVC-Masse spannungsfrei mit der temperaturbeständigeren Folie der Trägerschicht. Das Weich-PVC kann im Gussverfahren oder direkt auf einem dafür ausgerüsteten Folienkalander in erweichtem Zustand auf die Trägerschicht aufgetragen werden. Es besteht aber auch die Möglichkeit, die PVC-Beschichtung zunächst als dünne kalandrierte Folie in einem Heißprägekalander oder in einer Heißlaminieranlage über den Erweichungspunkt hinaus so zu erhitzen, dass sie sich mit der Trägerschicht verbindet. Bei dieser Heißbeschichtung lässt sich die Entstehung von unerwünschten Rückstellkräften in der Weich-PVC-Beschichtung vermeiden. Bei allen genannten Herstellungsverfahren wird die Adhäsionsseite der Adhäsionsbeschichtung entweder hochglänzend erhalten oder durch Bearbeitung mit einem nachfolgenden Hochglanzzylinder hochglänzend ausgerüstet. Die so hergestellte erfindungsgemäße Adhäsionsfolie ist dimensionsstabil und spannungsfrei planliegend.

Die oben erwähnten einzelnen Vorrichtungen zur Beschichtung und zur hochglänzenden Ausrüstung sind im Stand der Technik als solche bekannt. Die Anwendung von Druck ist bei der Herstellung der Folie nur insoweit notwendig, als damit bei höheren Produktionsgeschwindigkeiten verhindert werden kann, dass unerwünschte Lufteinschlüsse zwischen den Schichten zurückbleiben. Gegebenenfalls anzuwendender Druck ist abhängig von der Maschinenkonstruktion, Materialzusammensetzung und der Produktionsgeschwindigkeit.

Soll die Adhäsionsfolie bestehend aus der Trägerschicht (1) und der Adhäsionsschicht (2) zusätzlich auf der Seite der Trägerschicht mit einer Deckschicht (4) versehen werden, so wird die Deckschicht wie oben beschrieben mit handelsüblichen Klebern, bekannten Klebetechniken oder mittels Heißprägeverfahren mit der Trägerfolie verbunden.

Soll auf der Seite der Adhäsionsbeschichtung eine Abdeckschicht (3) angebracht werden, so wird die Abdeckschicht unter hohem Druck in einer Laminieranlage mit den übrigen Schichten zusammengefahren. Die leicht lösbare Haftverbindung von Adhäsionsschicht und Abdeckschicht entsteht allein durch die Molekularkräfte der Adhäsionsschicht auf die hochglänzende Seite der Abdeckschicht.

Wenn anstelle der Deckschicht (4) auf der der Adhäsionsschicht (2) gegenüberliegenden Seite der Trägerfolie eine weitere Adhäsionsschicht angebracht werden soll, so kann diese klebstofffrei wie oben im Zusammenhang mit der Auftragung der Adhäsionsschicht (2) beschrieben geschehen. Die Adhäsionsschichten (2) und (5) können gleichzeitig oder nacheinander auf die entsprechenden Seiten der Trägerfolie (1) aufgetragen werden.

**Patentansprüche**

1. Folie umfassend eine Trägerschicht (1) und eine Adhäsionsbeschichtung (2) aus Weich-PVC, **dadurch gekennzeichnet, dass** die Adhäsionsbeschichtung (2) klebstofffrei auf der Trägerschicht (1) angeordnet ist, die Trägerschicht eine Schichtdicke von 10 bis 45 μm und der Kunststoff der Trägerschicht (1) einen Schmelzpunkt von wenigstens 100°C aufweist und dieser wenigstens 20 °C über dem Erweichungspunkt des Weich-PVCs liegt und die Schichtdicke des Folienverbunds bestehend aus der Trägerschicht (1) und der Adhäsionsbeschichtung (2) höchstens 280 μm ist, wobei das Weich-PVC der Adhäsionsbeschichtung (2),
einen Stabilisator, der ausgewählt ist aus der Gruppe bestehend aus metallorganischen Verbindungen des Cadmiums, Bariums, Zinks, Calciums und Antimons sowie Barium/Calcium, Barium/Cadmium, Barium/Cadmium/Zink, Calcium/Zink und Barium/Zink und
wenigstens 28 Gew.-% eines monomeren, semipolymeren oder polymeren Weichmachers
enthält.

2. Folie nach Anspruch 1, **dadurch gekennzeichnet, dass** der Kunststoff der Trägerschicht (1) ausgewählt ist aus der Gruppe bestehend aus Polyestern, PVC, Polypropylen, Polyethylen und Polyacrylat.

3. Folie nach irgendeinem der Ansprüche 1 oder 2, **dadurch gekennzeichnet, dass** das Weich-PVC der Adhäsionsbeschichtung (2) einen Erweichungspunkt von 60 bis 90°C aufweist.

4. Folie nach Anspruch 1, **dadurch gekennzeichnet, dass** die Schichtdicke der Adhäsionsbeschichtung (2) 60 bis 200 μm beträgt.

5. Folie nach irgendeinem der Ansprüche 1 bis 4, **dadurch gekennzeichnet, dass** auf der Adhäsionsbeschichtung (2) eine Abdeckschicht (3) aus einem Kunststoff und/oder Papier oder einer Metallfolie angeordnet ist.

6. Folie nach Anspruch 5, **dadurch gekennzeichnet, dass** der Kunststoff der Abdeckschicht (3) ausgewählt ist aus der Gruppe bestehend aus Polyester, Polyethylen, Polypropylen und PVC.

7. Folie nach Anspruch 5, **dadurch gekennzeichnet, dass** die Abdeckschicht (3) eine Schichtdicke von 10 bis 400 μm aufweist.

8. Folie nach irgendeinem der Ansprüche 1 bis 7, **dadurch gekennzeichnet, dass** sie auf der der Adhäsionsbeschichtung (2) gegenüberliegenden Seite der Trägerschicht (1) zusätzlich eine Deckschicht (4) aus einem Kunststoff, Papier, einer Lack- oder Farbschicht oder einer Metallfolie aufweist.

9. Folie nach Anspruch 8, **dadurch gekennzeichnet, dass** der Kunststoff der Deckschicht (4) ausgewählt ist aus der Gruppe bestehend aus Polyester, Polyethylen, Polypropylen und PVC.

10. Folie nach Anspruch 8, **dadurch gekennzeichnet, dass** auf der Trägerschicht (1) oder der Deckschicht (4) eine Bedruckung aufgebracht ist.

11. Folie nach Anspruch 8, **dadurch gekennzeichnet, dass** die Deckschicht (4) eine Schichtdicke von 2 bis 250 μm aufweist.

12. Folie nach Anspruch 8, **dadurch gekennzeichnet, dass** sie anstelle der Deckschicht (4) eine Adhäsionsschicht (5) wie in irgendeinem der Ansprüche 3 bis 6 definiert klebstofffrei auf der Trägerschicht (1) aufweist.

13. Folie nach Anspruch 12, **dadurch gekennzeichnet, dass** die Adhäsionsschicht (5) eine Abdeckschicht (3) wie in irgendeinem der Ansprüche 6 bis 8 definiert aufweist.

14. Verfahren zur Herstellung der Folie wie in irgendeinem der Ansprüche 1 bis 4 definiert durch einseitiges Auftragen des Weich-PVC der Adhäsionsbeschichtung (2) auf die Trägerschicht (1), bei einer Verfahrenstemperatur von wenigstens dem Erweichungspunkt des Weich-PVC bis unterhalb des Schmelzpunktes des Kunststoffes der Trägerschicht (1).

15. Verfahren nach Anspruch 14, **dadurch gekennzeichnet, dass** die Adhäsionsseite der Adhäsionsbeschichtung (2) entweder hochglänzend erhalten oder durch einen nachfolgenden Hochglanzzylinder ausgerüstet wird.

**16.** Verfahren nach Anspruch 14 oder 15, **dadurch gekennzeichnet, dass** auf der Adhäsionsschicht (2) zusätzlich eine Abdeckschicht (3) angebracht wird.

**17.** Verfahren nach Anspruch 16, **dadurch gekennzeichnet, dass** die Abdeckschicht (3) eine Schichtdicke von 10 µm bis 400 µm aufweist.

**18.** Verfahren nach irgendeinem der Ansprüche 14 bis 17, **dadurch gekennzeichnet, dass** auf der der Adhäsionsbeschichtung (2) gegenüberliegenden Seite der Trägerschicht (1) zusätzlich eine Deckschicht (4) angebracht wird.

**19.** Verfahren nach Anspruch 18, **dadurch gekennzeichnet, dass** die Deckschicht (4) eine Schichtdicke von 2 µm bis 250 µm aufweist.

**20.** Verfahren nach Anspruch 18, **dadurch gekennzeichnet, dass** anstelle der Deckschicht (4) auf der der Adhäsionsschicht (2) gegenüberliegenden Seite der Trägerfolie (1) eine Adhäsionsschicht (5), wie in Anspruch 15 definiert, aufgetragen wird.

**21.** Verwendung der Folie nach irgendeinem der Ansprüche 1 bis 13 als Etikett, Oberflächenschutz, Befestigungshilfe, Spiel- und Organisationsmittel, Dekoration, Haftvermittler in industriellen Produktionsabläufen.

**Claims**

**1.** A sheet comprising a support layer (1) and an adhesion coating (2) of flexible PVC, **characterized in that** said adhesion coating (2) is arranged on said support layer (1) without an adhesive, said support layer has a layer thickness of from 10 to 45 µm and the plastic material of said support layer (1) has a melting point of at least 100 °C and at least 20 °C above the softening point of said flexible PVC, and the layer thickness of the composite sheet consisting of said support layer (1) and said adhesion coating (2) is at most 280 µm, said flexible PVC of the adhesion coating (2) containing:

a stabilizer selected from the group consisting of organometallic compounds of cadmium, barium, zinc, calcium and antimony as well as barium/calcium, barium/cadmium, barium/cadmium/zinc, calcium/zinc and barium/zinc; and

at least 28% by weight of a monomeric, semipolymeric or polymeric plasticizer.

**2.** The sheet according to claim 1, **characterized in that** the plastic material of said support layer (1) is selected from the group consisting of polyester, PVC, polypropylene, polyethylene and polyacrylate.

**3.** The sheet according to either of claims 1 or 2, **characterized in that** said flexible PVC of said adhesion coating (2) has a softening point of from 60 to 90 °C.

**4.** The sheet according to claim 1, **characterized in that** the layer thickness of said adhesion coating (2) is from 60 to 200 µm.

**5.** The sheet according to any of claims 1 to 4, **characterized in that** a cover layer (3) of a plastic material and/or paper or a metal foil is provided on said adhesion coating (2).

**6.** The sheet according to claim 5, **characterized in that** the plastic material of said cover layer (3) is selected from the group consisting of polyester, polyethylene, polypropylene and PVC.

**7.** The sheet according to claim 5, **characterized in that** said cover layer (3) has a layer thickness of from 10 to 400 µm.

**8.** The sheet according to any of claims 1 to 7, **characterized by** additionally having a cover layer (4) of a plastic material, paper, a paint or color layer or a metal foil on the side of the support layer (1) opposite said adhesion coating (2).

**9.** The sheet according to claim 8, **characterized in that** the plastic material of said cover layer (4) is selected from the group consisting of polyester, polyethylene, polypropylene and PVC.

10. The sheet according to claim 8, **characterized in that** a printing is provided on said support layer (1) or said cover layer (4).

11. The sheet according to claim 8, **characterized in that** said cover layer (4) has a layer thickness of from 2 to 250 μm.

12. The sheet according to claim 8, **characterized by** having an adhesion layer (5) as defined in any of claims 3 to 6 arranged on said support layer (1) without an adhesive instead of said cover layer (4).

13. The sheet according to claim 12, **characterized in that** said adhesion layer (5) has a cover layer (3) as defined in any of claims 6 to 8.

14. A method for the preparation of the sheet as defined in any of claims 1 to 4 by applying the flexible PVC of said adhesion coating (2) on one side of said support layer (1) at a process temperature which ranges from at least the softening point of the flexible PVC to below the melting point of the plastic material of said support layer (1).

15. The method according to claim 14, **characterized in that** the adhesive side of said adhesion coating (2) is either obtained in a high-gloss condition or finished subsequently by a. high-gloss cylinder.

16. The method according to claim 14 or 15, **characterized in that** a cover layer (3) is additionally provided on said adhesion layer (2).

17. The method according to claim 16; **characterized in that** said cover layer (3) has a layer thickness of from 10 μm to 400 μm.

18. The method according to any of claims 14 to 17, **characterized in that** a cover layer (4) is additionally provided on the side of the support layer (1) opposite said adhesion coating (2).

19. The method according to claim 18, **characterized in that** said cover layer (4) has a layer thickness of from 2 μm to 250 μm.

20. The method according to claim 18, **characterized in that** an adhesion layer (5) as defined in claim 15 is applied to the side of said support layer (1) opposite said adhesion layer (2) instead of said cover layer (4).

21. Use of the sheet according to any of claims 1 to 13 as a label, surface protection, fixing aid, playing and organization means, decoration, adhesion promoter in industrial production operations.

**Revendications**

1. Feuille comprenant un substrat (1) et un revêtement d'adhérence (2) en PVC souple, **caractérisée en ce que** ledit revêtement d'adhérence (2) est appliqué sans matière collante sur le substrat (1), le substrat présente une épaisseur de couche de 10 à 45 μm et la matière plastique du substrat (1) a un point de fusion de 100 °C au minimum et celui-ci est supérieur au point de ramollissement du PVC souple de 20 °C au minimum et l'épaisseur de couche de l'assemblage de la feuille composé du substrat (1) et du revêtement d'adhérence (2) est de 280 μm au maximum, le PVC souple du revêtement d'adhérence (2) comprenant un stabilisateur, qui est choisi parmi le groupe formé par les composés organométalliques du cadmium, baryum, zinc, calcium et de l'antimoine ainsi que du baryum/calcium, baryum/cadmium, baryum/cadmium/zinc, calcium/zinc et baryum/zinc et comprenant au mois 28 % en poids d'un agent plastifiant monomérique, semipolymérique ou polymérique.

2. Feuille selon la revendication 1, **caractérisée en ce que** la matière plastique du substrat (1) est choisie parmi le groupe formé par les polyesters, PVC, polypropylène, polyéthylène et polyacrylate.

3. Feuille selon une quelconque des revendications 1 ou 2, **caractérisée en ce que** le PVC souple du revêtement d'adhérence (2) présente un point de ramollissement de 60 à 90 °C.

4. Feuille selon la revendication 1, **caractérisée en ce que** l'épaisseur de couche du revêtement d'adhérence (2) est de 60 à 200 µm.

**5.** Feuille selon une quelconque des revendications 1 à 4, **caractérisée en ce que** sur le revêtement d'adhérence (2) est appliquée une couche de couverture (3) d'une matière plastique et/ou d'un papier ou d'une feuille métallique.

**6.** Feuille selon la revendication 5, **caractérisée en ce que** la matière plastique de la couche de couverture (3) est choisie parmi le groupe formé par polyester, polyéthylène, polypropylène et PVC.

**7.** Feuille selon la revendication 5, **caractérisée en ce que** la couche de couverture (3) présente une épaisseur de couche de 10 à 400 µm.

**8.** Feuille selon une quelconque des revendications 1 à 7, **caractérisée en ce qu'**elle présente sur le côté du substrat (1) opposé au revêtement d'adhérence (2) en plus une couche de finition (4) d'une matière plastique, de papier, d'une couche de vernis ou peinture ou d'une feuille métallique.

**9.** Feuille selon la revendication 8, **caractérisée en ce que** la matière plastique de la couche de finition (4) est choisie parmi le groupe formé par polyester, polyéthylène, polypropylène et PVC.

**10.** Feuille selon la revendication 8, **caractérisée en ce que** sur le substrat (1) ou sur la couche de finition (4) est appliquée une impression.

**11.** Feuille selon la revendication 8, **caractérisée en ce que** la couche de finition (4) présente une épaisseur de couche de 2 à 250 µm.

**12.** Feuille selon la revendication 8, **caractérisée en ce qu'**elle présente, au lieu de la couche de finition (4), une couche d'adhérence (5) telle que définie dans une quelconque des revendications 3 à 6 et appliquée sans matière collante sur le substrat (1).

**13.** Feuille selon la revendication 12, **caractérisée en ce que** la couche d'adhérence (5) présente une couche de couverture (3) telle que définie dans une quelconque des revendications 6 à 8.

**14.** Procédé pour la fabrication de la feuille telle que définie dans une quelconque des revendications 1 à 4 par application unilatérale du PVC souple du revêtement d'adhérence (2) sur le substrat (1) à une température de procédé d'au moins le point de ramollissement du PVC souple jusqu'au-dessous du point de fusion de la matière plastique du substrat (1).

**15.** Procédé selon la revendication 14, **caractérisé en ce que** le côté d'adhérence du revêtement d'adhérence (2) est soit obtenu poli, soit préparé au moyen d'un cylindre de polissage.

**16.** Procédé selon la revendication 14 ou 15, **caractérisé en ce que** sur la couche d'adhérence (2) est appliquée en plus une couche de couverture (3).

**17.** Procédé selon la revendication 16, **caractérisé en ce que** la couche de couverture (3) présente une épaisseur de couche de 10 µm à 400 µm.

**18.** Procédé selon une quelconque des revendications 14 à 17, **caractérisé en ce que** sur le côté du substrat (1) opposé au revêtement d'adhérence (2) est appliquée en plus une couche de finition (4).

**19.** Procédé selon la revendication 18, **caractérisé en ce que** la couche de finition (4) présente une épaisseur de couche de 2 µm à 250 µm.

**20.** Procédé selon la revendication 18, **caractérisé en ce que**, au lieu de la couche de finition (4), une couche d'adhérence (5) telle que définie dans la revendication 15 est appliquée sur le côté du substrat (1) opposé à la couche d'adhérence (2).

**21.** Utilisation de la feuille selon une quelconque des revendications 1 à 13 comme étiquette, protection superficielle, aide à la fixation, moyen de jeux et d'organisation, décoration, couche d'accrochage pour les processus de production industriels.

# FIGUREN

(1)
(2)

Fig. 1

(1)
(2)
(3)

Fig. 2

(4)
(1)
(2)
(3)

Fig. 3

(5)
(1)
(2)

Fig. 4

.(5)
(1)
.(2)
(3)

Fig. 5